# EUROPEAN PATENT SPECIFICATION

(11) **EP 1 833 326 B1**
(45) Date of publication and mention of the grant of the patent: **11.05.2011**
(21) Application number: 05818621.4
(22) Date of filing: 12.12.2005
(51) Int. Cl.: A46B 5/00, A46B 13/08

(54) **IMPROVEMENTS RELATING TO BRUSHES**
VERBESSERUNGEN FÜR BÜRSTEN
AMELIORATIONS APPORTEES A DES BROSSES

(30) Priority: 11.12.2004 GB 0427209
(43) Date of publication of application: 19.09.2007
(73) Proprietor: DEAN, Heera, Nitshill Glasgow G53 7AB (GB)
(72) Inventor: DEAN, Heera, Nitshill Glasgow G53 7AB (GB)
(74) Representative: McBride, Peter Hill
(86) International application number: PCT/GB2005/050240
(87) International publication number: WO 2006/061662

(56) References cited:
- EP-A- 0 396 764
- DE-C- 554 155
- FR-A- 649 074
- FR-A- 2 715 810
- FR-A- 2 754 436
- FR-E- 94 357
- GB-A- 193 601
- GB-A- 279 004
- GB-A- 280 067
- GB-A- 1 293 876
- US-A- 1 900 771
- US-A- 2 047 613
- US-A- 2 185 867
- US-A- 5 551 115
- US-A- 5 884 354
- US-A1- 2004 200 016

## Description

The present invention relates to brushes, especially toothbrushes.

Dentists advise that teeth are brushed for at least 2 minutes brushing the teeth thoroughly, using short gentle strokes, and paying extra attention to the gum line, hard-to-reach back teeth and areas around fillings, crowns or other restoration. They advise particular attention must be paid to cleaning the outer surfaces of upper teeth, then the lower teeth, cleaning the inner surfaces of the upper teeth, then the lower teeth, and cleaning the teeth's' chewing surfaces. For fresher breath, it is also advised to brush the tongue and inner cheeks.

However, in vast amount of cases the public at large do not follow the above advice and have their own technique. This makes for inefficient or incomplete brushing, increasing the danger of developing tooth decay and gum disease.

Standard toothbrushes find it difficult to provide a diversity of function to effectively perform the variety of cleaning functions that are required for effectively maintaining oral hygiene. Therefore, it is desirable to provide a toothbrush that can provide for cleaning in areas that are hard to reach and that is easy to use without requiring a radical change in brushing habits. Such toothbrushes are known from US 5 884 354 A or US 2 047 613 A.

According to the present invention there is provided a brush comprising a brush head; a handle portion; selectively engageable indexing means provided on the brush at a location spaced from the brush head and operable to provide selective rotation of the brush head with respect to the handle portion; and an actuator means for operation of the indexing means comprising an actuator arm and a drive means comprising a scroll wheel for moving the actuator arm.

Preferably, one of the scroll wheel and the body of the handle portion is provided with at least one tab and the other of the scroll wheel and the body of the handle portion is provided with at least one groove, the tabs and grooves being arranged such that in use a tab may be located within a groove to impede motion of the actuator arm.

Preferably, the actuator arm is connected at an upper end to the brush head and is shaped such that linear motion of the actuator arm causes a rotational motion of the brush head.

Preferably, the actuator arm runs along a track provided in the shaft of the handle portion.

Preferably, the actuator arm is formed from a rubber material.

Preferably, the brush is a toothbrush.

Embodiments of toothbrushes with rotatable heads will now be described, by way of example only, with reference to the following drawings in which:
Figs. 1 to 4 show side, front and head end views respectively of a toothbrush;
Fig. 5 is a perspective rear view of a rotatable connector assembly of the toothbrush depicted in Figs. 1 to 4 showing detail of the plug member;
Fig. 6 is a perspective front view of the rotatable connector assembly of Fig. 5 showing detail of the socket;
Figs. 7 and 8 show a toothbrush;
Figs. 9-12 show a toothbrush;
Figs. 13-15 show a toothbrush;
Figs. 16-19 show a toothbrush according to the present invention;
Figs. 20 and 21 show a toothbrush; and
Figs. 22-24 show a toothbrush.

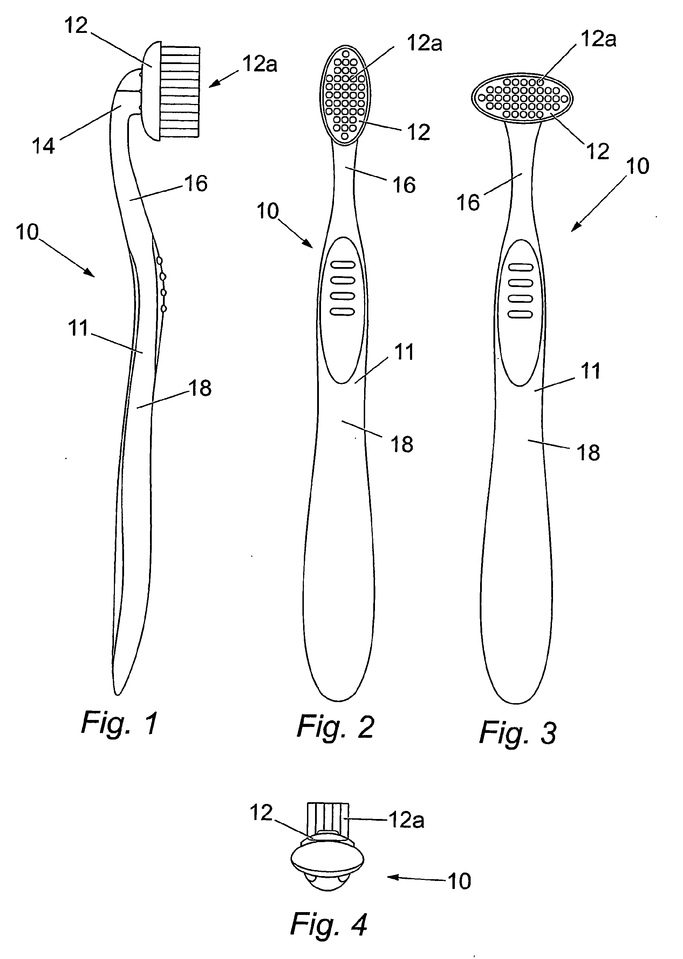

A toothbrush as known from FR 2 754 436 A is illustrated in Figs. 1 to 4 There is shown a toothbrush generally referred to as 10. The toothbrush 10 comprises a brush head 12 and handle portion 11 which in turn comprises a neck portion 14, a stem 16 and a handle 18. The brush head 12 has a plurality of nylon bristles 12a extending from it.

Aside from the nylon bristles 12a, the toothbrush 10 is formed from a plastics material which may be any material, such as a polymer, suitable for the purpose. It is advantageous if the plastics material has a resilient quality.

The toothbrush 10 is similar in general form to those well known in the art and is primarily intended for use in maintaining oral hygiene.

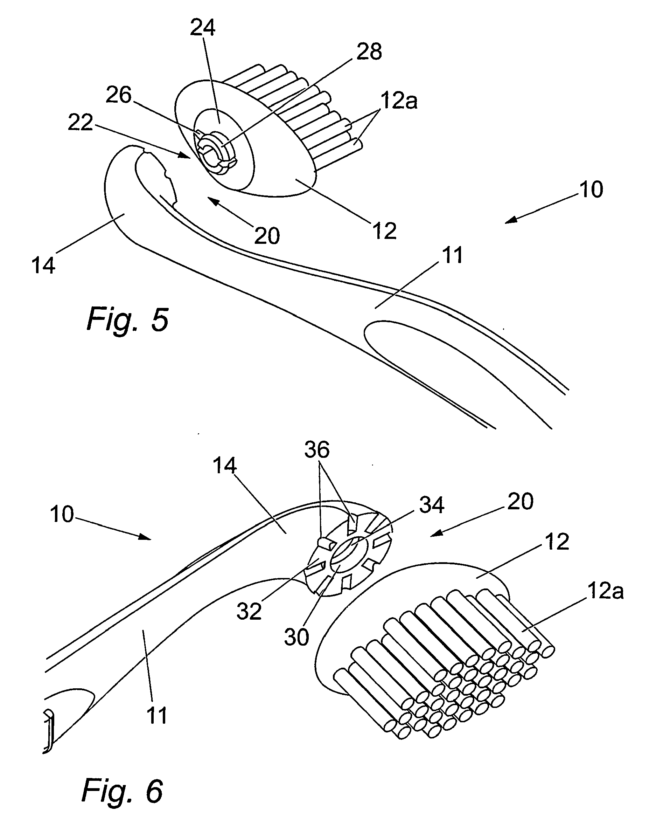

Turning now to Figs. 5 and 6, there is shown detail of a rotatable connector assembly 20 located between the brush head 12 and the neck portion 14. The rotatable connector assembly 20 allows the brush head 12 to be rotated around its central axis. This allows the user to vary the angle of the brush head 12 relative to the handle portion 11.

The rotatable connector assembly 20 comprises a section located on the brush head 12 and a section located on the handle portion 11.

Referring to Fig. 5, the section located on the brush head 12 comprises a plug member 22 which extends away from the brush head 12. Around the lower edge of the plug member 22 there is provided a plug flange 24. Extending radially from the plug member 22 along the surface of the plug flange 24 is provided a tab 26. The tab 26 is generally semi-circular in cross section. The plug member 22 is in two parts, with a gap between each part.

Extending peripherally around the upper edge of the plug member 22 and protruding radially outward from the plug member 22 is a plug lip 28. The plug lip 28 increases slightly in diameter in a linear manner, from initially coterminous with the diameter of the plug member 22 to its greatest diameter at its lowest edge, located nearest the plug flange 24.

Referring to Fig. 6, there is shown detail of the section of the rotatable connector assembly 20 that is provided on the neck portion 14. This comprises a socket 30 around the top edge of which is provided a socket flange 32. Around the inner surface of the socket 30 there is provided a lip-engaging groove 34.

Extending radially inward from the outer edge of the socket flange 32 towards the socket 30 there is a plurality of tab-engaging grooves 36. The tab-engaging grooves 36 are generally semi-circular in cross section.

In situ, the plug member 22 is located within the socket 30. The plug lip 28 is located within the lip-engaging groove 34. The two flanges 24,32 abut one another and the tab 26 co-operably engages one of the tab-engaging grooves 36, locking the brush head 12 into a particular position. The construction of the plug member 22 allows it to be inserted into the socket 30 and be securely held therein by the engagement of the plug lip 28 and the lip-engaging groove 34. Particularly, the linear diameter increase of the plug lip 28 and the fact that the plug member 22 is formed in two parts with a gap between each part coupled with the use of a resilient material, allows the plug member 22 to be pushed into engagement with the socket 30 without excessive force. Once held within the socket 30, the interaction of the plug lip 28 and the lip-engaging groove 34 impede removal of the plug member 22 from the socket. However, some small displacement of the plug member 22 relative to the socket 30 is provided for.

In a variation, tab engaging grooves may be formed on the brush head 12 and the tab may be formed on an inner surface of the socket 34. The "tab and groove" arrangement provides an indexing means, that is means which define a series of predetermined interlock positions for positioning of the brush head relative to the handle portion.

In use, the toothbrush 10 is preset at a particular angle. The user may select a different angle of brush 12 by pulling the brush head gently away from the neck portion 14, thereby disengaging the tab 26 from one of the tab-engaging grooves 36. The user may then rotate the brush head 12 with respect to the neck portion 14 and re-engage the tab 26 with another of the tab-engaging grooves 36. Figs. 1 and 3 show the brush head 12 in two different positions.

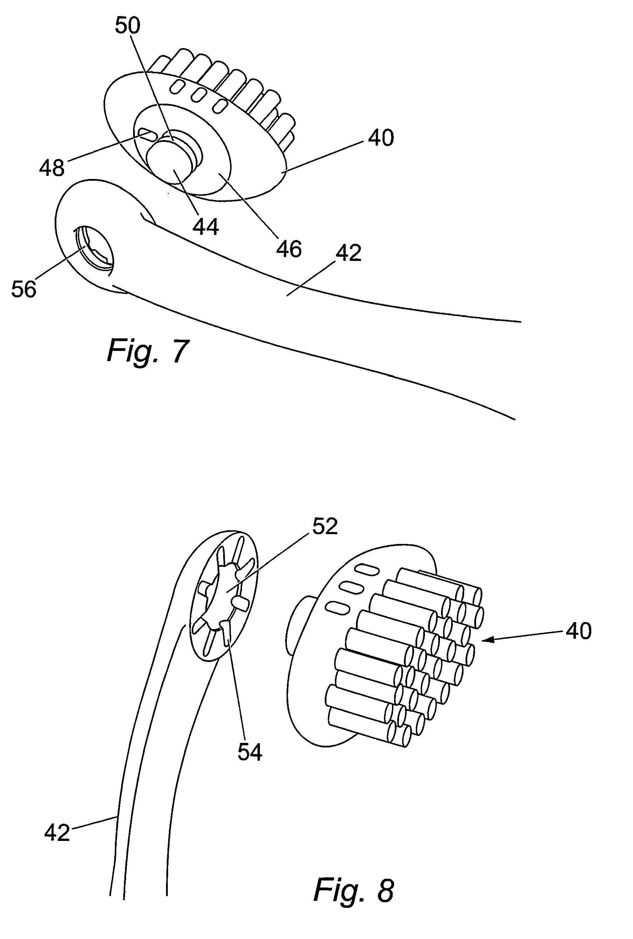

Figs. 7 and 8 illustrate a brush similar to that known from US 2 047 613 A. As in the first brush, a rotatable connector assembly is provided which comprises a section located on the brush head 40 and a section located on the handle portion 42.

Referring to Fig. 7, the section located on the brush head 40 comprises a plug member 44 which extends away from the brush head 40. Around the lower edge of the plug member 44 there is provided a plug flange 46. Extending radially from the plug member 44 along the surface of the plug flange 46 is provided a tab 48. The tab 48 is generally semi-circular in cross section, and is provided with a notched recess 50.

Referring to Fig. 8, there is shown detail of the section of the rotatable connector assembly that is provided on the neck portion 42. This comprises a socket formed from an aperture 52 in the neck portion 42. The inner surface of the aperture is provided with a plurality of tab-engaging grooves 54. The tab-engaging grooves 45 are generally semi-circular in cross section.

The plug member 44 engages in a snap fit with the socket, the notched recess 50 of the plug member 44 engaging with a corresponding lip 56 of the socket, being provided as a circumferential groove. The groove provides a certain amount of give for selective engagement of the notched recess 50 with the groove, while the plug 44 remains in the aperture 52.

In a variation of this embodiment, tab engaging grooves may be formed on the brush head 40 and the tab may be formed on an inner surface of the aperture 50.

In use, the user may select a different angle of brush head 40 in a manner similar to that of the first embodiment.

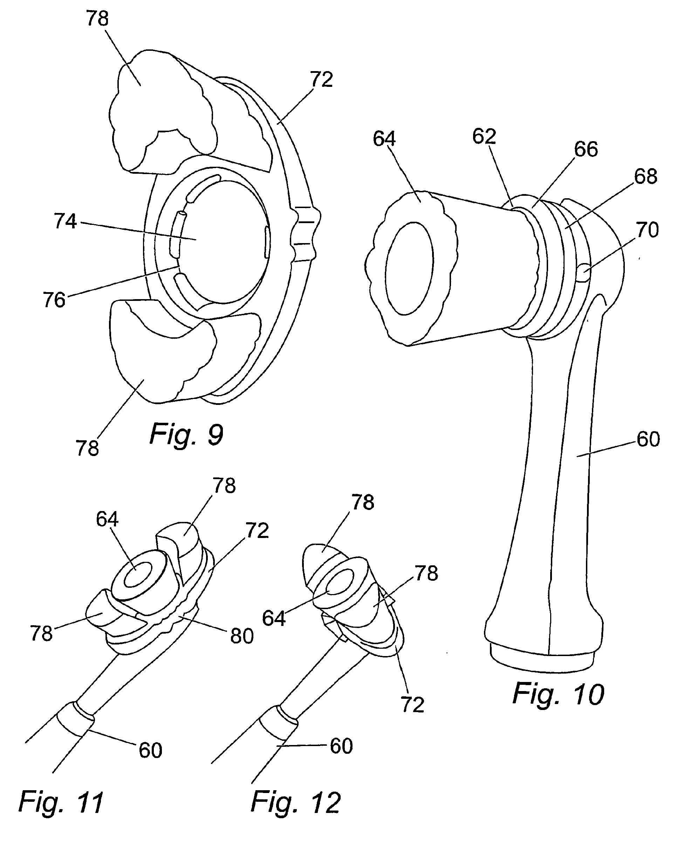

Another toothbrush is shown in Figs. 9-12. As shown in Fig. 10, a handle portion 60 has a bristle head 62 provided thereupon. The bristle head 62 comprises bristles 64 which are mounted on a base member 66. the bristle head 62 is of a well known form, being for use with an electric motor which drives the bristles 64 about the central axis of the bristle head 62. The handle portion 60 further comprises a circumferential recess 68 with an indexing tab 70.

Fig. 9 shows the brush head 72, which comprises an aperture 74 for receiving the bristle head 62. The inner surface of the aperture 74 receives the recess 68 of the bristle head 62 and comprises a plurality of notches 76 for engagement wit the tab 70 of the handle portion 60. The brush head 72 is further provided with side bristles 78 on its peripheral portions.

When the brush is assembled, the brush head 72, and with it the side bristles 78, are selectively rotatable in a manner similar to the first and second embodiments. Figs. 11 and 12 show examples of two different brush head positions. As can be seen in Fig. 11, the brush head 72 may be provided with a grip portion 80 for ease of use.

This brush provides the advantages of an electric toothbrush, with the further enhancement of a selectively rotatable brush head to clean those "hard-to-reach" areas of the mouth.

A feature of a brush according to various embodiments of the present invention is to provide an indexing means at a point spaced from the brush head. Embodiments with this feature have an actuator for operation of the indexing means.

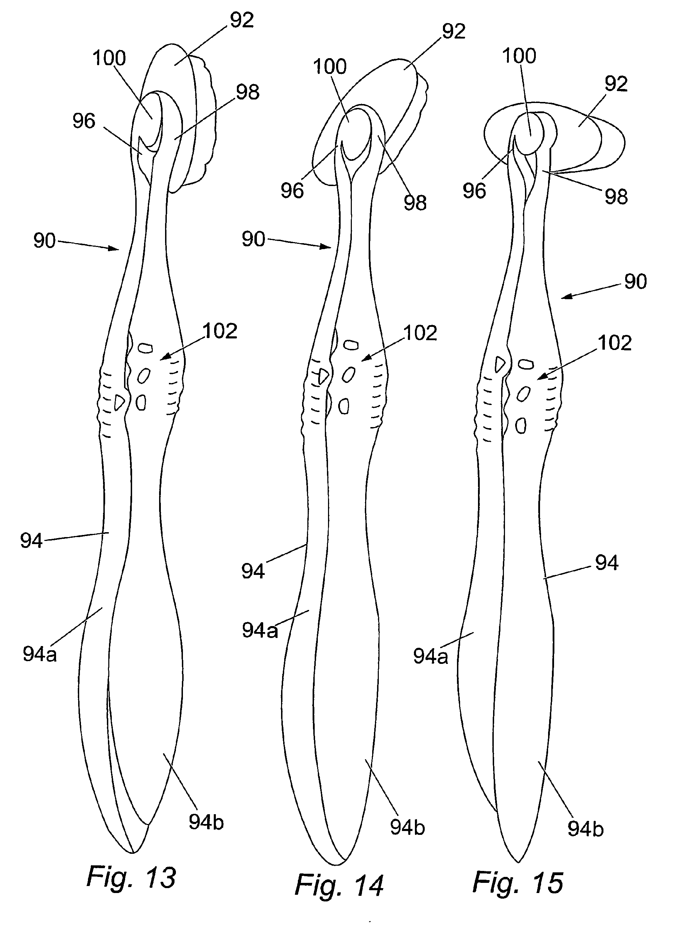

Figs. 13-15 illustrate a brush according to DE 554 155. A brush 90 comprises a brush head 92 and a handle portion 94 which is composed of two halves, 94a and 94b. the two halves 94a,94b of the handle portion 94 have corresponding corrugations on the inner surfaces thereof, which act as an indexing means. The halves 94a and 94b have upper portions 96, 98 respectively which are connected to opposing sides of a protrusion 100 from the brush head 92. The halves 94a,94b are slidably moveable in order to rotate the brush head 92. A snap-fit runner feature (not shown) can be provided on the inside of the brush 90 to enable this movement.

Fig. 13 illustrates a first rotation position, where a first half 94a is lowered relative to the second half 94b. In this position, the brush head 92 is held vertically.

Fig. 14 illustrates a second rotation position, where a first half 94a is held level with the second half 94b. In this position, the brush head 92 is inclined at an angle.

Fig. 15 illustrates a third rotation position, where a second half 94b is lowered relative to the first half 94a. In this position, the brush head 92 is held horizontally.

The positions are labelled by indicia 102 on each of the halves 94a, 94b for ease of selection by the user. In use, the user pulls the two halves 94a,94b slightly apart, then moves the halves relative to each other until the indicia 102 line up to his desired angle of rotation. The snap fit runner feature acts as a stop member to limit the disengagement of the halves 94a,94b, although it allows them to move far enough apart for the respective corrugations to disengage. When the user re-engages the corrugations, the two halves 94a,94b are then held together by a snap fit and/or by pressure applied by the hand of a user.

In one variation of this embodiment, the upper portions 96, 98 of the two halves 94a,94b are formed as one piece with the protrusion 100 provided on the brush head 92, and are formed from a flexible material to provide a hinge type arrangement. In an alternative arrangement, the protrusion 100 comprises a fixed plug and a rotatable outer portion to which the upper portions 96, 98 of the two halves 94a,94b are attached.

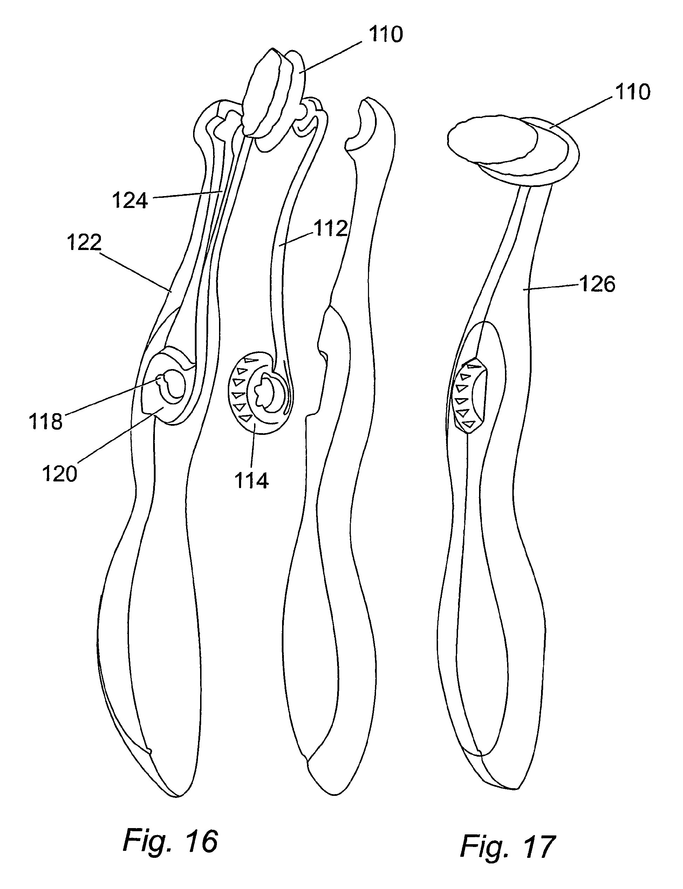

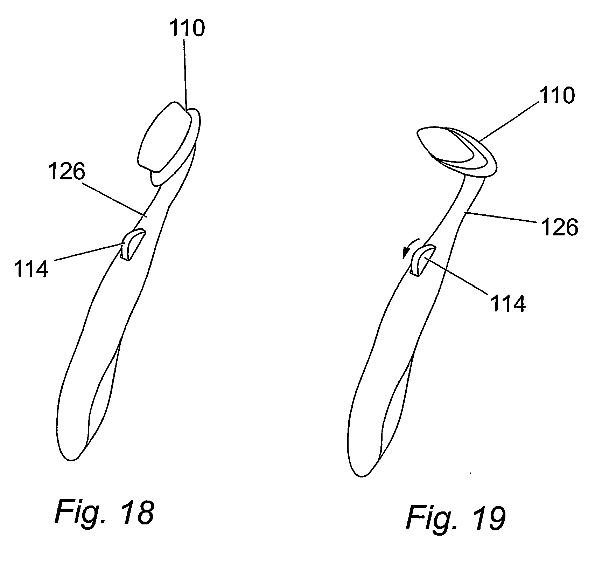

A brush according to an embodiment of the invention is illustrated in Figs. 16-19. As seen in Fig. 16, a brush head 110 is connected to an actuator arm 112, which has a connected scroll wheel 114 which acts as a drive means for the arm 112. The scroll wheel 114 is provided with a series of notches 116 which are selectively engageable with a tab 118 provided in a specially formed recess 120 in the handle portion 122.

The shape of the actuator arm 112 is such that an upward movement causes an anticlockwise rotation of the brush head 110 and a downward movement causes a clockwise rotation of the brush head 110, as seen in Fig. 16.

The actuator arm travels along a specially formed channel 124 within the body of the brush to provide the desired effect. The actuator arm can be formed from a high tensile rubber or spring steel material.

The assembled brush 126 is shown in Figs. 17-19, from which it can be seen that a simple rotation of the scroll wheel 114 moves the brush head 110 to different desired rotations.

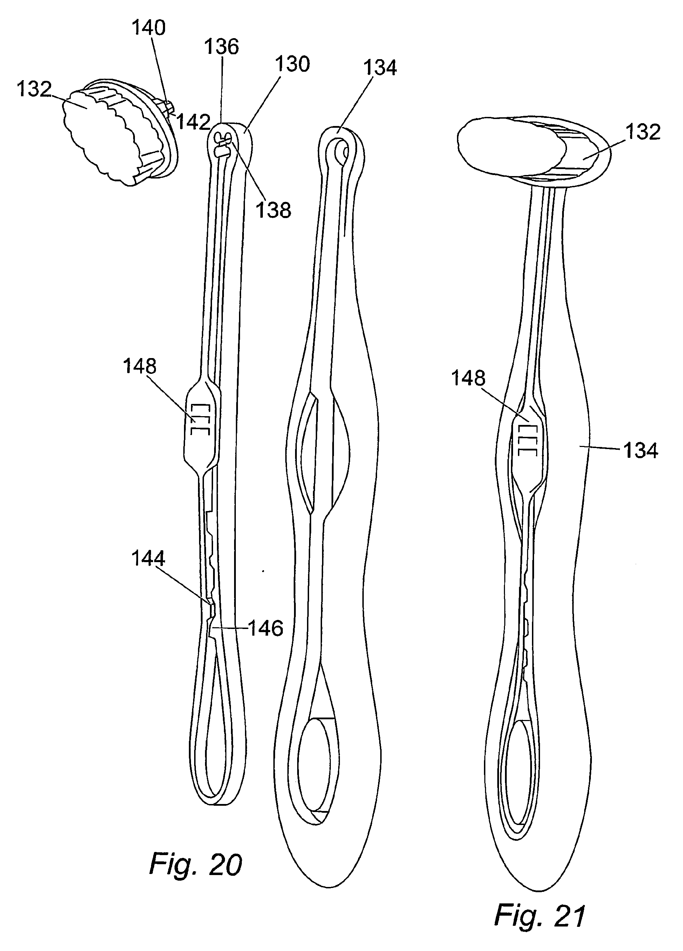

Another brush is shown in Figs. 20 and 21. A belt member 130 is provided for the rotation of a brush head 132 relative to a handle portion 134.

The belt 130 can be driven in a direction along the longitudinal axis of the brush. An upper portion 136 is provided with teeth 138 for engagement with corresponding teeth 140 provided on a protrusion 142 from the brush head 132.

The belt 130 is provided with interlocking protrusions 144, 146 on opposing internal sides to provide an indexing function. A push pad 148 is provided for driving the belt member 130. As seen in Fig. 21, the push pad 148 is provided at an outer surface of the brush for easy activation by a user.

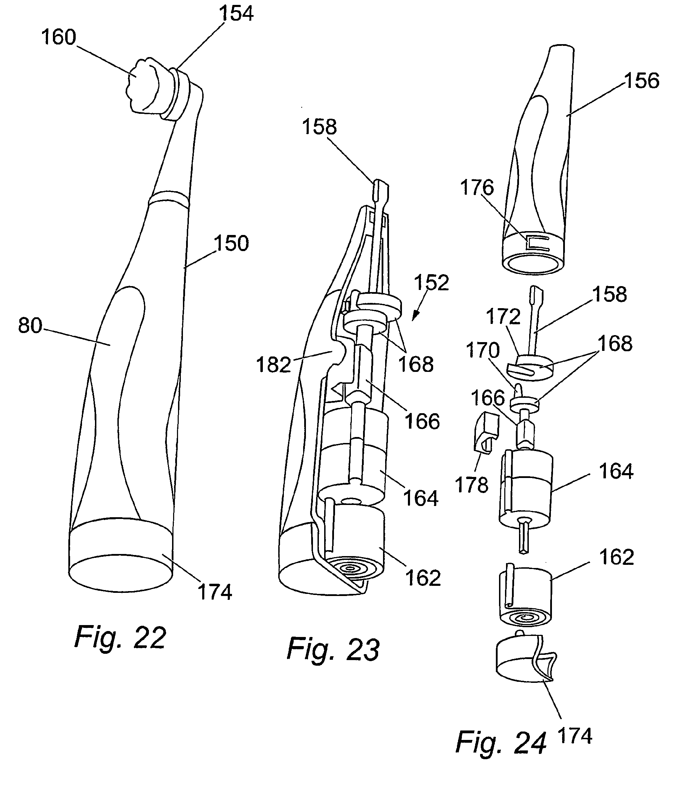

Another brush150 is shown in Figs. 22-24, provided with mechanical drive means 152 for rotation of a brush head 154. Fig. 22 shows a brush 150, while Fig. 23 shows a partial cut-away view, and Fig. 24 shows an exploded view of the mechanical drive means and handle portion 156.

The mechanical drive means 152 comprises a head connector 158 which is engageable with the brush head 154 in a known manner such that rotation of the head connector 158 causes a rotation of the brush head 154 so that the bristles 160 on the brush head rotate. The force for driving the head connector 158 is provided by a spring 162 which is windable to apply a torque. The torque could optionally be provided by a rubber band, or some other suitable means.

To improve operation of the brush, a gear train 164, in this case an epicyclical gear train, is provided to increase the number of rotations of the head connector 158 with respect the number of rotations of the spring 162. A shaft 166 of the gear train 164 can also be provided with a first part of an oscillator 168, comprising a projection 170 for engagement with a corresponding notch 172 in an outer portion of a base of the head connector 158.

In use, a drive member 174, in this case comprising a wheel, is moved in order to tension the spring 162. The wheel can be made of a rubber material so that the user can push or roll the wheel along a flat surface.

The wheel 174 comprises an internal fluting for engagement with a ratchet member 176 provided on the handle portion 156, so that once the wheel 174 has been rotated to tension the spring 162, the wheel 174 can be held in place to resist the uncoiling force of the spring 162, thus ensuring that the energy of the spring uncoiling is transferred only into the rotation of the head connector 158.

The mechanical drive means 152 can further be provided with a brake means 178 which is selectively engageable to clamp the shaft 166 of the gear train 164, thus preventing the spring 162 from unwinding, that is, holding it in tension. The brake means is operable by a user by pressure applied to a brake pad 180 on the external surface of the brush 150. Pressing the brake pad 180 urges a protrusion 182 formed as part of the handle portion to push the brake 178 into engagement with the shaft 166. The matching square profiles of the brake 178 and shaft 166 serve to provide a locking function.

In use, the user uses twists or rolls the wheel 174 to wind up the toothbrush 150. The bristles 160 on the brush head 154 then start to rotate so that the user can brush their teeth. When the user wants to pause brushing, he can press the brake applicator 180 to store the potential energy provided by the spring 162.

The brush of the present invention provides a number of advantages. Because the head of the brush can be twisted to multiple positions, brushing in key areas such as the outer and inner back teeth and gums is easier and more effective as compared with previous toothbrushes, and there is less restraint on the brushing technique for the user. The flexibility of the design gives more effective cleaning of the tongue and inner front teeth.

For example, although the described embodiments have one tab, it will be apparent to those skilled in the art that further tabs may be provided to increase the impeding affect of the tab/groove engagement.

Further, it will also be understood to those skilled in the are that the number and position of the tab-engaging grooves may be varied. The tab-engaging grooves do not have to be spaced in an equiangular manner.

## Claims

1. A brush (126) comprising a brush head (110); a handle portion (122); selectively engageable indexing means (118) provided on the brush (126) at a location spaced from the brush head (110) and operable to provide selective rotation of the brush head (110) with respect to the handle portion (122); and an actuator means for operation of the indexing means comprising an actuator arm (112) and a drive means (114) **characterized in that** the drive means (114) comprises a scroll wheel (114) for moving the actuator arm (112).

2. The brush (126) of claim 1, wherein one of the scroll wheel (114) and the body of the handle portion (122) is provided with at least one tab (118) and the other of the scroll wheel (114) and the body of the handle portion (122) is provided with at least one groove, the tabs and grooves being arranged such that in use a tab (118) may be located within a groove to impede motion of the actuator arm (112).

3. The brush (126) of claim 1 or claim 2, wherein the actuator arm (112) is connected at an upper end to the brush head (110) and is shaped such that linear motion of the actuator arm (112) causes a rotational motion of the brush head (110).

4. The brush (126) of any preceding claim, wherein the actuator arm (112) runs along a track (124) provided in the shaft of the handle portion (122).

5. The brush (126) of any preceding claim, wherein the actuator arm (112) is formed from a rubber material.

6. The brush (126) of any preceding claim, being a toothbrush.

## Patentansprüche

1. Eine Bürste (126), die einen Bürstenkopf (110); einen Griffabschnitt (122); ein selektiv eingreifbares Indexierungsmittel (118), das auf der Bürste (126) an einer Stelle, die von dem Bürstenkopf (110) mit Abstand angeordnet ist, bereitgestellt ist und betrieben werden kann, um eine selektive Drehung des Bürstenkopfs (110) mit Bezug auf den Griffabschnitt (122) bereitzustellen, und ein Betätigungsmittel zum Betrieb des Indexierungsmittels, das einen Betätigungsarm (112) und ein Antriebsmittel (114) beinhaltet, beinhaltet, **dadurch gekennzeichnet, dass** das Antriebsmittel (114) ein Scrollrad (114) zum Bewegen des Betätigungsarms (112) beinhaltet.

2. Bürste (126) gemäß Anspruch 1, wobei eines von dem Scrollrad (114) und dem Körper des Griffabschnitts (122) mit mindestens einer Zunge (118) bereitgestellt ist und das andere von dem Scrollrad (114) und dem Körper des Griffabschnitts (122) mit mindestens einer Rille bereitgestellt ist, wobei die Zungen und Rillen so angeordnet sind, dass sich bei Verwendung eine Zunge (118) innerhalb einer Rille befinden kann, um den Bewegungsablauf des Betätigungsarms (112) zu behindern.

3. Bürste (126) gemäß Anspruch 1 oder Anspruch 2, wobei der Betätigungsarm (112) an einem oberen Ende mit dem Bürstenkopf (110) verbunden ist und so geformt ist, dass ein linearer Bewegungsablauf des Betätigungsarms (112) einen Drehbewegungsablauf des Bürstenkopfs (110) verursacht.

4. Bürste (126) gemäß einem der vorhergehenden Ansprüche, wobei der Betätigungsarm (112) entlang einer in dem Schaft des Griffabschnitts (122) bereitgestellten Spur (124) verläuft.

5. Bürste (126) gemäß einem der vorhergehenden Ansprüche, wobei der Betätigungsarm (112) aus einem Kautschukmaterial gebildet ist.

6. Bürste (126) gemäß einem der vorhergehenden Ansprüche, die eine Zahnbürste ist.

## Revendications

1. Une brosse (126) comprenant une tête de brosse (110) ; une portion formant manche (122) ; des moyens d'indexage engageables de manière sélective (118) prévus sur la brosse (126) au niveau d'un emplacement espacé de la tête de brosse (110) et manipulables pour fournir une rotation sélective de la tête de brosse (110) par rapport à la portion formant manche (122) ; et un moyen actionneur pour manipuler les moyens d'indexage comprenant un bras d'actionneur (112) et un moyen d'entraînement (114) **caractérisé en ce que** le moyen d'entraînement (114) comprend une molette (114) pour déplacer le bras d'actionneur (112).

2. La brosse (126) de la revendication 1, dans laquelle un élément d'entre la molette (114) et le corps de la portion formant manche (122) est pourvu d'au moins une patte (118) et l'autre élément d'entre la molette (114) et le corps de la portion formant manche (122) est pourvu d'au moins une rainure, les pattes et rainures étant arrangées de telle sorte que, lors de l'utilisation, une patte (118) puisse être placée au sein d'une rainure afin d'entraver le déplacement du bras d'actionneur (112).

3. La brosse (126) de la revendication 1 ou de la revendication 2, dans laquelle le bras d'actionneur (112) est raccordé au niveau d'une extrémité supérieure à la tête de brosse (110) et est d'une forme telle qu'un déplacement linéaire du bras d'actionneur (112) occasionne un déplacement rotationnel de la tête de brosse (110).

4. La brosse (126) de n'importe quelle revendication précédente, dans laquelle le bras d'actionneur (112) passe dans une voie (124) prévue dans l'arbre de la portion formant manche (122).

5. La brosse (126) de n'importe quelle revendication précédente, dans laquelle le bras d'actionneur (112) est formé à partir d'une matière caoutchouteuse.

6. La brosse (126) de n'importe quelle revendication précédente, laquelle est une brosse à dents.
